# FASCICULE DE BREVET EUROPEEN

(11) **EP 3 087 361 B1**
(45) Date de publication et mention de la délivrance du brevet: **11.10.2017**
(21) Numéro de dépôt: 14831017.0
(22) Date de dépôt: 23.12.2014
(51) Int. Cl.: G01K 1/14, G01D 4/00

(54) **ÉQUIPEMENT DE RELÈVE ET DE TRANSMISSION DE VALEURS MESURÉES DE TEMPÉRATURE**
VORRICHTUNG ZUM LESEN UND SENDEN VON GEMESSENEN TEMPERATURWERTEN
DEVICE FOR READING AND TRANSMITTING MEASURED TEMPERATURE VALUES

(30) Priorité: 26.12.2013 FR 1363580
(43) Date de publication de la demande: 02.11.2016
(73) Titulaire: SUEZ Groupe, 92040 Paris la Défense CEDEX (FR)
(72) Inventeur: HERBRON, Jean René, F-78420 Carrières-sur-Seine (FR)
(74) Mandataire: Gendron, Vincent Christian
(86) Numéro de dépôt international: PCT/FR2014/053538
(87) Numéro de publication internationale: WO 2015/097407

(56) Documents cités:
- WO-A1-2008/102104
- FR-A1- 2 951 266

## Description

La présente invention se rapporte à un équipement de relevé et de transmission de valeurs mesurées de température pour un dispositif de contrôle d'un fluide circulant à l'intérieur d'une conduite.

Un domaine d'application envisagé, est notamment mais non exclusivement, celui des dispositifs de comptage de fluide et en particulier d'eau.

Des équipements de relevé et de transmission de valeurs mesurées de grandeurs physiques, et en particulier de température et de débit, sont bien connus pour la télérelève de compteur de fluide et notamment de compteur d'eau.

S'agissant des dispositifs de comptage d'eau froide, ils sont bien évidemment sensibles à la température environnante, puisque l'eau se solidifie à la pression atmosphérique lorsque la température est inférieure à 0 °C et qu'au surplus, de manière singulière, sa masse volumique diminue. Aussi, il est nécessaire de pouvoir relever, outre le débit, mais aussi la température qui règne dans l'environnement de l'équipement.

Pour ce faire, l'équipement comporte un capteur de température et un émetteur alimenté par une pile électrique, installés sur le dispositif de contrôle. En outre, il comprend un récepteur permettant de recueillir les valeurs mesurées par le capteur de température notamment. Usuellement, l'émetteur est un émetteur radiofréquence. Le récepteur peut recueillir les valeurs mesurées d'une pluralité d'émetteur pour les concentrer et ensuite les retransmettre à son tour vers un réseau pour pouvoir les traiter.

On pourra notamment se référer au document FR 2 929 752, lequel décrit un tel équipement. Le capteur de température, la pile électrique et l'émetteur font partie d'un même ensemble piloté par un microprocesseur. On pourra aussi se référer aux documents FR 2 951 266 A1 et WO 2008/102104 A1. Toutefois, les capteurs de température usuellement mis en oeuvre pour détecter la température sont relativement bon marché et leur précision est toute relative, de telle sorte que la détection du gel de l'eau est imprécise. Des capteurs plus précis peuvent être mis en oeuvre, toutefois, ils sont plus coûteux. En outre, les capteurs de température évoluent au cours du temps si bien qu'on observe une dispersion des mesures au fil du temps.

Aussi, un problème qui se pose et que vise à résoudre la présente invention est de fournir un équipement de relevé et de transmission de valeurs mesurées de température, qui permette de pouvoir mesurer plus précisément la valeur de température correspondant à la solidification du fluide circulant à l'intérieur de la conduite, et ce, à un coût avantageux. Au surplus, un autre problème est de pouvoir mesurer précisément cette valeur de température malgré l'évolution des capteurs.

Dans le but de résoudre ces problèmes, la présente invention propose un équipement de relevé et de transmission de valeurs mesurées de température pour un dispositif de contrôle d'un fluide circulant à l'intérieur d'une conduite, ledit équipement comprenant, d'une part un capteur de température apte à fournir en fonction du temps des valeurs de température et un module de traitement desdites valeurs de température, et d'autre part, un émetteur relié audit capteur de température pour pouvoir émettre, des signaux représentatifs desdites valeurs de température, et un récepteur pour pouvoir recevoir lesdits signaux. Ledit capteur de température est destiné à être monté dans une position rapprochée de ladite conduite ; et ledit module de traitement est apte à évaluer une vitesse de variation de température, et à élaborer un signal d'alerte de transformation dudit fluide en phase solide, lorsque ladite vitesse de variation de température décroît dans un intervalle de temps donné.

Ainsi, une caractéristique de l'invention réside dans le suivi temporel de la température près de la conduite où circule le fluide et dans l'évaluation d'une vitesse de variation de température afin de déterminer précisément, la température de changement de phase du liquide circulant. En effet, lors du changement de phase d'un corps, par exemple lorsqu'un liquide devient solide, sa température reste constante. Aussi, lorsque la température environnante diminue, avec une vitesse moyenne sensiblement constante, au passage du changement de phase du corps, de l'état liquide à l'état solide, sa température demeure constante jusqu'à la totale solidification dudit corps. Partant, à l'amorce de ce changement de phase, la vitesse de diminution de température du corps s'infléchie et diminue. L'enregistrement à intervalles de temps réguliers de la température, lors de ce changement de phase, en partant de l'état liquide pour aller vers l'état solide, permet de calculer cette vitesse. On observera que le capteur de température doit être suffisamment près du fluide concerné pour pouvoir être impacté significativement par la température dudit fluide.

De la sorte, quelle que soit la précision du capteur, on élabore un signal d'alerte de gel du fluide correspondant effectivement à sa solidification, et non pas uniquement à la lecture de la valeur mesurée par le capteur de température, qui peut, elle, être imprécise et varier dans le temps. Au surplus, le capteur de température mis en oeuvre peut alors être de qualité modeste et par conséquent, moins coûteux.

On observera que ce type d'équipement peut convenir à un dispositif de contrôle d'un fluide tel qu'un compteur de fluide et en particulier d'eau, un actionneur de vanne ou à tout capteur associé à la circulation d'un fluide.

Selon une variante de réalisation de l'invention particulièrement avantageuse, l'équipement comprend en outre un autre capteur de température, destiné à être monté dans une position écartée de ladite conduite pour pouvoir fournir d'autres valeurs de température. Et ledit module de traitement est apte à évaluer une autre vitesse de variation de température, et à élaborer ledit signal d'alerte, lorsqu'en outre, ladite autre vitesse de variation de température demeure sensiblement constante dans ledit intervalle de temps donné. Aussi, le second capteur de température constitue alors une référence car il est, lui, soumis à la seule température du milieu environnant et la variation de température du fluide lors du changement de phase n'a aucun impact sur lui. Par conséquent, le signal est élaboré lorsque la vitesse de variation de l'un des capteurs diminue de façon significative par rapport à l'autre vitesse de variation dudit autre capteur. On s'affranchit ainsi de l'élaboration d'un signal d'alerte intempestif, comme on l'expliquera plus en détail dans la suite de la description, lorsque la seule température du milieu diminue jusqu'à la température de solidification puis augmente ensuite.

Au surplus, selon un mode de mise en oeuvre particulièrement avantageux, ledit signal d'alerte est élaboré lorsqu'en outre, ladite vitesse de variation de température croît dans un autre intervalle de temps donné succédant audit un intervalle de temps donné. De la sorte, on vient s'assurer que le profil de la vitesse de variation de température au passage de la température de changement de phase correspond bien à une solidification. En effet, après que le fluide a été solidifié, la vitesse de variation de sa température croît à nouveau sensiblement parallèlement à la vitesse de variation de la température du milieu environnant.

Selon une caractéristique de l'invention préférée, ledit module de traitement est monté sur ledit récepteur. Le récepteur pouvant accueillir des signaux représentatifs des valeurs mesurées d'une pluralité d'émetteur, le module de traitement est alors mutualisé et est capable d'analyser les valeurs mesurées de température d'une pluralité de dispositifs de contrôle de fluide. Au surplus, les mises à jour du programme de traitement et d'analyse des valeurs mesurées sont plus aisées à réaliser au niveau du récepteur.

L'équipement selon l'invention comprend une pile électrique pour alimenter ledit émetteur et ledit capteur de température. Sa durée de vie est par exemple prévue pour être comprise entre 10 et 20 ans. Aussi, l'émetteur et le capteur de température sont adaptés à un mode de fonctionnement permettant d'économiser les ressources de la pile électrique. Au surplus, l'équipement comprend en outre, de manière préférentielle, un capteur de comptage relié audit émetteur, pour fournir audit récepteur des valeurs de volume de fluide circulant à l'intérieur de ladite conduite.

Par ailleurs, lesdits signaux représentatifs desdites valeurs de température sont émis, selon une caractéristique préférentielle, lorsque la valeur de température fournie par ledit capteur de température est inférieure à un seuil de température supérieur à la température de solidification de l'eau à la pression atmosphérique. Ainsi, en fonction de la précision des capteurs de température, on détermine un seuil de température au-dessus duquel la probabilité avec laquelle le fluide peut se solidifier est nulle. De la sorte, la transmission des signaux correspondant aux valeurs de température ne sont émis que lorsque cela est nécessaire. Partant, les ressources de la pile électrique sont économisées.

En outre, lesdites valeurs de température sont fournies avantageusement, dans ledit intervalle de temps donné, à une fréquence comprise entre 10⁻² et 10⁻¹ Hz. Par exemple, les valeurs de température sont fournies toutes les 60 secondes, ce qui permet d'évaluer une vitesse de variation de température significative en fonction de la vitesse de variation de température de l'environnement du dispositif de contrôle.

Selon un autre objet, la présente invention concerne un dispositif de contrôle d'un fluide circulant à l'intérieur d'une conduite, ledit dispositif comprenant, d'une part un corps apte à être traversé par ledit fluide et un totalisateur surmontant ledit corps et d'autre part, un équipement selon les caractéristiques ci-dessus, ledit capteur de température étant installé sur ledit corps. De la sorte, le capteur de température est situé au plus près du fluide et partant, subit précisément ses variations de température. En outre, ledit autre capteur est installé sur ledit totalisateur. Et, de préférence, à l'opposé dudit un capteur de température, de manière à ne pas subir les variations de température du fluide, et à ne subir que les variations de température de l'environnement du dispositif.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique de l'équipement de relevé et de transmission selon l'invention ;
- la Figure 2 est un synoptique d'un élément de l'équipement illustré sur la Figure 1; et,
- la Figure 3 est un graphe illustrant le principe de fonctionnement de l'équipement illustré sur la Figure 1.

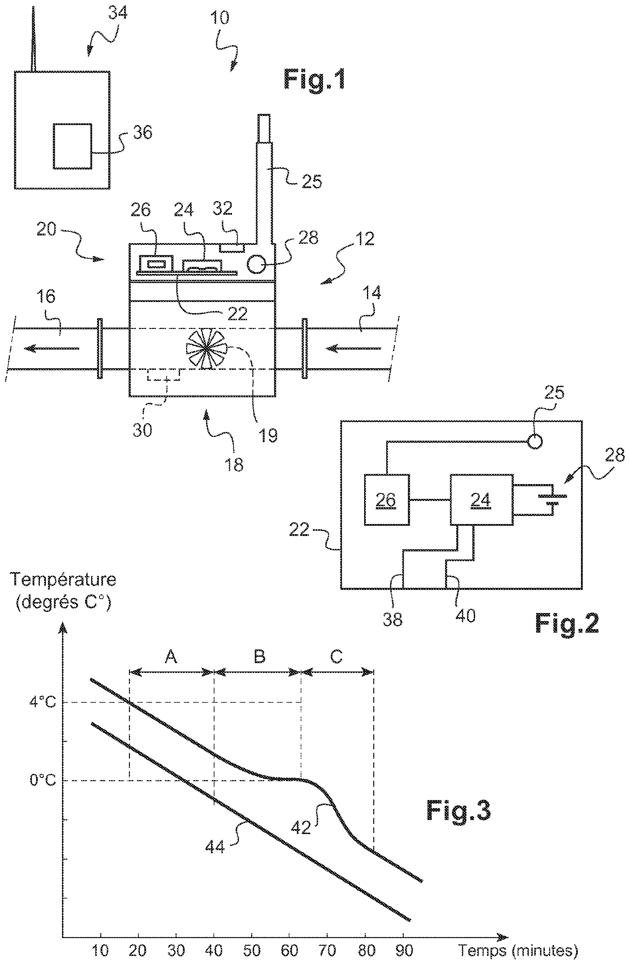

La Figure 1 montre un équipement de relevé et de transmission 10 de valeurs mesurées de température, mais aussi de débit, et ce pour un compteur d'eau 12. L'équipement de relevé et de transmission 10 vise alors, non seulement à relever périodiquement la quantité d'eau consommée, mais aussi, à détecter la survenance du gel de l'eau à 0 °C dans le compteur 12. Le compteur d'eau 12 est installé entre une arrivée d'eau d'un conduit 14 de distribution d'eau et une entrée 16 d'un circuit privé d'eau, par exemple une habitation individuelle. Il présente un corps 18 incluant une turbine ou un moyen de mesure volumétrique 19 et à travers lequel circule l'eau, et un totalisateur 20 incluant un transducteur, non représenté, permettant de transformer en signal électrique de consommation les mouvements de la turbine 19. Plus précisément, le transducteur permet de transformer le mouvement mécanique de la turbine 19 en informations numériques. Le totalisateur 20 est également équipé d'un circuit électronique 22 comportant un premier microprocesseur 24 et un émetteur radiofréquence 26 relié au premier microprocesseur 24. Il est également surmonté d'une antenne 25 reliée à l'émetteur 26. Le circuit électronique 22 est alimenté par une pile électrique 28.

L'équipement 10 est également muni d'un premier capteur de température 30 monté dans le corps 18 contre le chemin de passage de l'eau, ou chambre hydraulique, lequel capteur de température 30 est relié au premier microprocesseur 24. Il est aussi équipé, selon une autre variante de réalisation, d'un second capteur de température 32 situé au sommet du totalisateur 20 et relié tout comme le premier, au microprocesseur 24. On observera que les capteurs de température 30, 32 sont des capteurs bon marché, constitués par exemple d'un capteur à résistance de platine, dont la précision est de l'ordre de +/- 1°C.

L'équipement 10 comprend en outre un récepteur 34 muni d'un module de traitement 36 incluant un second microprocesseur et une mémoire. On observera que le récepteur 34 peut être associé à une pluralité d'émetteur 26 et par conséquent, à une pluralité de compteur d'eau 12. En outre, le récepteur 34 peut lui-même être relié à un réseau centralisateur par liaison radio ou bien filaire. Ainsi, les informations numériques correspondant au débit d'eau à travers le corps 18 sont-elles communiquées à l'émetteur 26 par l'intermédiaire du microprocesseur 24, tout comme le sont les informations fournies par les capteurs de température 30, 32.

On retrouve plus en détail sur la Figure 2, le circuit électronique 22. On distingue le microprocesseur 24 relié d'une part à l'émetteur 26 et d'autre part à la pile électrique 28. L'émetteur 26 est relié à l'antenne 25, tandis que le microprocesseur 24 présente une première liaison 38 destinée à être reliée au premier capteur de température 30 et une seconde de liaison 40 destinée à être reliée au second capteur de température 32. Le microprocesseur 24 est également directement relié au transducteur.

Ainsi, grâce au microprocesseur 24, les valeurs mesurées de température par le premier capteur de température 30 sont échantillonnées avec une période, par exemple, de l'ordre de la minute, soit à une fréquence de 1,67.10⁻² Hz. De la sorte, les valeurs de température correspondantes sont communiquées à l'émetteur 26 qui lui, émet des signaux représentatifs desdites valeurs à destination du récepteur 34. Ce dernier, par l'intermédiaire du module de traitement 36 est apte à stocker les valeurs de température correspondantes et à les traiter.

Par ailleurs, et dans un but d'économie de la pile électrique 28, et selon un mode de mise en oeuvre de l'invention particulièrement avantageux, le microprocesseur 24 communique des valeurs de température mesurées, uniquement lorsque ces températures sont par exemple inférieures à 4 °C. De la sorte, compte tenu de la précision du capteur de température 30, les valeurs de température mesurées ne seront communiquées à l'émetteur 26, uniquement à l'approche de la température de solidification de l'eau par valeurs positives. On évitera ainsi la transmission des valeurs de température mesurées lorsqu'il n'y a aucun risque de gel.

Ainsi, dès lors que les valeurs de température mesurées par le premier capteur de température 30 sont inférieures à 4 °C, selon l'exemple précité, le microprocesseur 24 communique à l'émetteur 26 toutes les valeurs mesurées avec une périodicité de 60 secondes par exemple, et l'émetteur 26 émet des signaux représentatifs des valeurs mesurées pour les transmettre au récepteur 34. Le module de traitement 36 analyse alors ces valeurs de température et calcule une vitesse de variation de température.

On se reportera sur la Figure 3 afin de décrire l'analyse des valeurs de température, lorsque la température subie par le premier capteur de température 30 décroît en dessous de 4 °C. Par hypothèse, on supposera que la température environnant le compteur d'eau 12 décroît de façon uniforme et continue. Dans une première étape A, les valeurs de température mesurées en fonction du temps, et définissant la courbe 42 décroissent continûment et uniformément. Partant, la vitesse de variations de température est constante et la pente de la courbe correspondante sur la Figure est rectiligne et négative. Dès lors que l'eau contenue ou circulant dans le corps 18 du compteur d'eau 12, s'approche de sa température de solidification, la vitesse de variation de température diminue, car durant la transformation de l'eau, de son état liquide vers son état solide, la température demeure constante. Aussi, le premier capteur de température 30 situé près de la chambre hydraulique, subit les variations de température de l'eau qu'elle renferme et partant, les valeurs de température mesurées révèlent une diminution de la vitesse de variations de la température. Cette diminution de vitesse de variation de température calculée par le module de traitement 36 correspond à une seconde étape B illustrée sur la Figure 3.

La diminution de la vitesse de variation de température correspondant à l'étape B se traduit par une variation de la pente à la courbe jusqu'à un palier. Ainsi, le module de traitement 36 élabore un signal d'alerte, par exemple dès lors que trois vitesses successives de variation de température s'écartent progressivement de la valeur constante correspondant à l'étape A de décroissance. Ce signal d'alerte est par exemple associé à une information horaire fournie par l'horloge du second microprocesseur, et est transmise au réseau central. De la sorte, on comprend qu'un signal d'alerte peut être émis de manière fiable, avec un capteur de température bon marché, en suivant la vitesse de variation des valeurs de température mesurées au voisinage de la température de changement d'état de l'eau.

Selon un autre mode de mise en oeuvre, on utilise les valeurs de température mesurées grâce au second capteur de température 32, lequel est situé au sommet du totalisateur 20 du compteur d'eau 12. Aussi, le second capteur de température 32 permet de capter la température environnant le compteur d'eau 12 et n'est nullement sensible à la vitesse de variation de température correspondant au changement de phase de l'eau circulant à travers le compteur d'eau 12. Au surplus, tout comme pour le premier capteur de température 30, le microprocesseur 24 communique des valeurs de température mesurées par le second capteur 32, uniquement lorsque ces températures sont inférieures à 4 °C.

On supposera que la température du milieu environnant et captée par le second capteur de température 32, est sensiblement inférieure à la valeur de température captée par le premier capteur 30 car il est moins protégé thermiquement. Aussi, lorsque la température environnant le compteur d'eau 12 décroît de façon uniforme et continue, le module de traitement 36 calcule la vitesse de variation de température correspondant aux valeurs de température mesurées en fonction du temps par le second capteur de température 32, et cette vitesse correspond à la pente de la droite 44.

Aussi, selon ce second mode de mise en oeuvre, le module de traitement compare, chaque valeur de température mesurée au même instant par les deux capteurs de température 32, 30. Ainsi comme illustré sur la Figure 3, dès lors que l'écart est constant, on considère que l'eau circulant dans le corps 18 du compteur d'eau 12, est en phase liquide. En revanche, dès lors que les valeurs mesurées respectivement par les deux capteurs de température 32, 30 s'écartent progressivement, on considère que l'eau se solidifie. Partant, le module de traitement 36 élabore le signal d'alerte.

Ce second mode de mise en oeuvre, permet de mettre au jour les cas où la température de l'eau circulant à travers le corps 18 du compteur d'eau 12 vient frôler la température de solidification sans l'atteindre. Car en effet, ce mode de mise en oeuvre permet de détecter sensiblement plus tôt la survenance du gel.

Les deux premiers modes de mise en oeuvre, permettent de détecter le changement de phase de l'eau circulant dans le corps 18 du compteur d'eau 12, dans un intervalle de temps donné correspondant à un intervalle de température compris sensiblement entre 4 °C et 0 °C. Selon un troisième mode de mise en oeuvre, la détection de gel peut se faire de manière encore plus fiable, dans un intervalle compris par exemple entre 4 °C et - 4 °C et selon lequel on enregistre dans une troisième étape C, la vitesse de variation de température des valeurs de température mesurées par le premier capteur de température 30. En effet, dans cette troisième étape C, la vitesse de variation de température, après s'être sensiblement annulée autour de la température de changement de phase de l'eau, va ensuite s'accélérer lorsque toute l'eau deviendra solide.

Aussi, il est également possible de programmer le module de traitement 36 afin qu'il n'élabore un signal d'alerte, qu'à la double condition que la vitesse de variation de température fournie par les valeurs mesurées du premier capteur de température 30, ait décru selon l'étape B, durant un premier intervalle de temps et qu'elle ait cru ensuite, selon l'étape C selon un second intervalle de temps, succédant immédiatement au premier.

En outre, l'évolution des vitesses de variation de la température fournies par les valeurs mesurées du premier capteur de température 30, peuvent être comparées par rapport aux vitesses de variations de la température fournies par les valeurs mesurées du second capteur de température 32 durant les deux intervalles précités, pour élaborer le signal d'alerte.

On comprend bien évidemment, que l'équipement de relevé de transmission de valeurs mesurées de température peut être adapté à tout dispositif de contrôle d'un fluide, et par exemple, une vanne d'arrêt.

## Revendications

1. Equipement de relevé et de transmission (10) de valeurs mesurées de température pour un dispositif de contrôle (12) d'un fluide circulant à l'intérieur d'une conduite, ledit équipement comprenant, d'une part un capteur de température (30) apte à fournir en fonction du temps des valeurs de température et un module de traitement (36) desdites valeurs de température, et d'autre part, un émetteur (26) relié audit capteur de température (30) pour pouvoir émettre, des signaux représentatifs desdites valeurs de température, et un récepteur (34) pour pouvoir recevoir lesdits signaux,
ledit capteur de température (30) étant destiné à être monté dans une position rapprochée de ladite conduite ; **caractérisé en ce que** ledit module de traitement (36) est apte à évaluer une vitesse de variation de température, et à élaborer un signal d'alerte de transformation dudit fluide en phase solide, lorsque ladite vitesse de variation de température décroît dans un intervalle de temps donné.

2. Equipement selon la revendication 1, **caractérisé en ce qu'**il comprend en outre un autre capteur de température (32), destiné à être monté dans une position écartée de ladite conduite pour pouvoir fournir d'autres valeurs de température, et **en ce que** ledit module de traitement (36) est apte à évaluer une autre vitesse de variation de température, et à élaborer ledit signal d'alerte, lorsqu'en outre, ladite autre vitesse de variation de température demeure sensiblement constante dans ledit intervalle de temps donné.

3. Equipement selon la revendication 1 ou 2, **caractérisé en ce que** ledit signal d'alerte est élaboré lorsqu'en outre, ladite vitesse de variation de température croît dans un autre intervalle de temps donné succédant audit un intervalle de temps donné.

4. Equipement selon l'une quelconque des revendications 1 à 3, **caractérisé en ce que** ledit module de traitement (36) est monté sur ledit récepteur (34).

5. Equipement selon l'une quelconque des revendications 1 à 4, **caractérisé en ce qu'**il comprend une pile électrique (28) pour alimenter ledit émetteur (26) et ledit capteur de température (70).

6. Equipement selon l'une quelconque des revendications 1 à 5, **caractérisé en ce qu'**il comprend en outre un capteur de comptage relié audit émetteur (26), pour fournir audit récepteur (34) des valeurs de volume de fluide circulant à l'intérieur de ladite conduite.

7. Equipement selon l'une quelconque des revendications 1 à 6, **caractérisé en ce que** lesdits signaux représentatifs desdites valeurs de température sont émis lorsque la valeur de température fournie par ledit capteur de température (30) est inférieure à un seuil de température supérieur à la température de solidification de l'eau à la pression atmosphérique.

8. Equipement selon l'une quelconque des revendications 1 à 7, **caractérisé en ce que** lesdites valeurs de température sont fournies, dans ledit intervalle de temps donné, à une fréquence comprise entre 10⁻² et 10⁻¹ Hz.

9. Dispositif de contrôle d'un fluide (12) circulant à l'intérieur d'une conduite, ledit dispositif comprenant, d'une part un corps (18) apte à être traversé par ledit fluide et un totalisateur (20) surmontant ledit corps (18) et d'autre part, un équipement (10) selon l'une quelconque des revendications 1 à 8, **caractérisé en ce que** ledit capteur de température (30) est installé sur ledit corps (18).

10. Dispositif selon la revendication 2 et 9, **caractérisé en ce que** ledit autre capteur (32) est installé sur ledit totalisateur (20).

## Patentansprüche

1. Ausrüstung zum Ermitteln und Übertragen (10) von gemessenen Temperaturwerten für eine Steuervorrichtung (12) eines Fluids, das im Innern einer Leitung zirkuliert, wobei die Ausrüstung zum einen einen Temperatursensor (30), der imstande ist, zeitabhängig Temperaturwerte zu liefern, und ein Verarbeitungsmodul (36) der Temperaturwerte, und zum anderen einen Sender (26), der mit dem Temperatursensor (30) verbunden ist, um für die Temperaturwerte repräsentative Signale zu senden, und einen Empfänger (34), um die Signale empfangen zu können, umfasst,
wobei der Temperatursensor (30) bestimmt ist, in einer an die Leitung angenäherten Position montiert zu sein,
**dadurch gekennzeichnet, dass** das Verarbeitungsmodul (36) imstande ist, eine Geschwindigkeit der Temperaturschwankung zu berechnen und ein Warnsignal der Umwandlung des Fluids in Festphase auszugeben, wenn die Geschwindigkeit der Temperaturschwankung in einem vorgegebenen Zeitintervall abnimmt.

2. Ausrüstung nach Anspruch 1, **dadurch gekennzeichnet, dass** sie ferner einen anderen Temperatursensor (32) umfasst, der bestimmt ist, in einer von der Leitung beabstandeten Position montiert zu sein, um andere Temperaturwerte liefern zu können, und dass das Verarbeitungsmodul (36) imstande ist, eine andere Geschwindigkeit der Temperaturschwankung zu berechnen und das Warnsignal auszugeben, wenn ferner die andere Geschwindigkeit der Temperaturschwankung in dem vorgegebenen Zeitintervall etwa konstant bleibt.

3. Ausrüstung nach Anspruch 1 oder 2, **dadurch gekennzeichnet, dass** das Warnsignal ausgegeben wird, wenn ferner die Geschwindigkeit der Temperaturschwankung in einem anderen Zeitintervall steigt, das dem vorgegebenen Zeitintervall folgt.

4. Ausrüstung nach einem der Ansprüche 1 bis 3, **dadurch gekennzeichnet, dass** das Verarbeitungsmodul (36) auf dem Empfänger (34) montiert ist.

5. Ausrüstung nach einem der Ansprüche 1 bis 4, **dadurch gekennzeichnet, dass** sie eine elektrische Batterie (28) umfasst, um den Sender (26) und den Temperatursensor (70) zu versorgen.

6. Ausrüstung nach einem der Ansprüche 1 bis 5, **dadurch gekennzeichnet, dass** sie ferner einen Zählsensor umfasst, der mit dem Sender (26) verbunden ist, um dem Empfänger (34) Volumenwerte des Fluids zu liefern, das im Innern der Leitung zirkuliert.

7. Ausrüstung nach einem der Ansprüche 1 bis 6, **dadurch gekennzeichnet, dass** die für die Temperaturwerte repräsentativen Signale gesendet werden, wenn der von dem Temperatursensor (30) gelieferte Temperaturwert unter einer Temperaturschwelle liegt, der über der Verfestigungstemperatur des Wassers bei atmosphärischem Druck liegt.

8. Ausrüstung nach einem der Ansprüche 1 bis 7, **dadurch gekennzeichnet, dass** die Temperaturwerte im vorgegebenen Zeitintervall in einer Frequenz zwischen 10⁻² et 10⁻¹ Hz inklusive geliefert werden.

9. Steuervorrichtung eines Fluids (12), das im Innern einer Leitung zirkuliert, wobei die Vorrichtung zum einen einen Körper (18), der von dem Fluids durchquert wird, und eine Totalisator (20) auf dem Körper (18) und zum anderen eine Ausrüstung (10) nach einem der Ansprüche 1 bis 8 umfasst, **dadurch gekennzeichnet, dass** der Temperatursensor (30) auf dem Körper (18) installiert ist.

10. Vorrichtung nach Anspruch 2 und 9, **dadurch gekennzeichnet, dass** der andere Sensor (32) auf dem Totalisator (20) installiert ist.

## Claims

1. A unit of equipment (10) for reading and transmitting measured values of temperature for a device (12) for monitoring and/or controlling a fluid flowing inside of a conduit, said equipment comprising, on the one hand, a temperature sensor (30) capable of supplying values of temperature as a function of time and a processing module (36) for said temperature values, and on the other hand, a transmitter (26) connected to said temperature sensor (30) so as to be able to transmit signals representative of said temperature values, and a receiver (34) so as to be able to receive said signals, said temperature sensor (30) being intended to be installed in a position close to said conduit; **characterized in that** said processing module (36) is capable of evaluating a rate of variation of temperature, and of generating a signal warning of the transformation of said fluid into the solid phase, when said rate of variation of temperature decreases within a given interval of time.

2. The equipment as claimed in claim 1, **characterized in that** it furthermore comprises another temperature sensor (32), intended to be installed in a position away from said conduit so as to be able to supply other values of temperature, and **in that** said processing module (36) is capable of evaluating another rate of variation of temperature, and of generating said warning signal when, furthermore, said other rate of variation of temperature remains substantially constant within said given interval of time.

3. The equipment as claimed in either of claims 1 and 2, **characterized in that** said warning signal is generated when, furthermore, said rate of variation of temperature increases within another given interval of time following said given interval of time.

4. The equipment as claimed in any one of claims 1 to 3, **characterized in that** said processing module (36) is mounted onto said receiver (34).

5. The equipment as claimed in any one of claims 1 to 4, **characterized in that** it comprises an electrical battery (28) for supplying said transmitter (26) and said temperature sensor (70).

6. The equipment as claimed in any one of claims 1 to 5, **characterized in that** it furthermore comprises a metering sensor connected to said transmitter (26) in order to supply to said receiver (34) values of volume of fluid flowing inside of said conduit.

7. The equipment as claimed in any one of claims 1 to 6, **characterized in that** said signals representative of said temperature values are transmitted when the value of temperature supplied by said temperature sensor (30) is lower than a temperature threshold higher than the solidification temperature of the water at atmospheric pressure.

8. The equipment as claimed in any one of claims 1 to 7, **characterized in that** said temperature values are supplied, within said given interval of time, at a frequency in the range between 10⁻² and 10⁻¹ Hz.

9. A device for monitoring and/or controlling a fluid (12) flowing inside of a conduit, said device comprising, on the one hand, a body (18) through which said fluid is able to flow and a total volume meter (20) mounted on top of said body (18) and, on the other hand, a unit of equipment (10) as claimed in any one of claims 1 to 8, **characterized in that** said temperature sensor (30) is installed on said body (18).

10. The device as claimed in claim 2 and 9, **characterized in that** said other sensor (32) is installed on said total volume meter (20).
